# EUROPEAN PATENT APPLICATION

(11) **EP 2 899 961 A1**
(43) Date of publication of application: **29.07.2015**
(21) Application number: 14200120.5
(22) Date of filing: 23.12.2014
(51) Int. Cl.: H04N 1/00, H04N 1/42, G06Q 10/10, H04N 1/44

(54) **Multifunction multimedia totem for remote use**

(30) Priority: 22.01.2014 IT MI20140079
(71) Applicant: PHONETICA LAB S.R.L., 20037 Paderno Dugnano (MI) (IT)
(72) Inventor: Durante, Marco, 20020 ARESE MI (IT); Durante, Giuseppe, 20020 ARESE MI (IT)
(74) Representative: Modiano, Micaela Nadia

(57) **Abstract**

A system for the remote management of services, which comprises means for communication between a user station (1, 1a, 1b) and at least one video assistance station (2, 3, 3a, 3b, 3c), the system further comprising: means for detecting the selection on the part of the user of at least one service managed by the system; means for activating functionalities that are associated with the selected service; and means for selecting and associating dynamically, on the basis of the activation, one of the video assistance stations (2, 3a, 3b, 3c).

## Description

The present invention relates to the field of telecommunications and remote services. In particular, the invention relates to a system and a method for the management of services between a plurality of user stations that are located for example in a shopping mall, in a shop, in an office or in a public place in general, and a plurality of operator stations that are located remotely with respect to the user station.

The remote management of a service, which is nowadays very widespread especially in the sector of services for managing telephone switchboards, makes it possible to respond to the requirements of a user without requiring the presence on site of an operator. This type of management is particularly appreciated by providers of services because it makes it possible to assist the customers rapidly and with a considerable saving in costs both for infrastructure and for staff.

In the known art, represented for example by international Patent application PCT/IB2012/057791 by the same applicant, multimedia platforms are known, commonly called totems, which make it possible to provide this type of management.

With this type of platform it is possible to, for example, control access to protected areas, by having a preliminary step of accreditation by way of an exchange of information with a remote operator who is contacted through the platform.

In other circumstances, for example in the field of marketing or of product promotion, the same platforms make it possible to performing purchases without the need for an operator to be physically present in the same place where the customer is. The customer can in fact obtain, after authorization from a remote operator assigned for the purpose, a voucher, for example a paper document, that entitles the customer to collect the purchased product for example from a dispenser.

In the systems in the known art, however, for each service there is a specific, dedicated totem, which is equipped with only the peripherals that are necessary to carry out the intended task.

For example, a totem used for controlling access to a protected area will have a scanner and a device for generating access badges, which instead are not necessary in a totem used for displaying promotional information.

Although the use of totems has been found to be useful and practical, supplying separate totems for separate services entails a multiplication of the costs and of the spaces necessary for leasing the totems.

In some cases, for example in the use of totems for controlling access to an area, once an access badge has been given out, the totem remains inactive until such time as a new visitor arrives.

The same happens in those cases in which the totem is dedicated to a service with a low frequency of use on the part of users over the course of the day, during which the totem is not used for long periods.

These situations lead to needless redundancy and an evident waste of resources.

It is furthermore not possible, using the contrivances that are presently in the known art, to use the same totem to provide more than one service. In fact, if for example the same totem for controlling access is used for providing information about the company to occasional visitors, these could gain access to the access badge dispenser, thus causing evident security problems.

The same applies for access to services that require different resources and functions. With traditional totems, in fact, the user has full access to all the resources of the totem, which is configured for one specific use and is provided with the appropriate functionalities and peripherals.

The aim of the present invention is to overcome the above mentioned drawbacks of the known art, by providing a new system for the remote management of multiple services which is capable of providing a plurality of services.

Within this aim, an object of the present invention is to combine the flexibility requirements deriving from the use of a multimedia platform and to adjust such flexibility on the basis of the various different services.

This aim and these and other objects which will become better apparent hereinafter are achieved by a system for the remote management of services to users which comprises means for communication between a user station and at least one video assistance station that belongs to an operator; means for detecting the selection on the part of said user of at least one service managed by said system; means for activating the use on the part of said user of said selected service; and means for selecting and associating dynamically, on the basis of said activation, one of said video assistance stations.

This aim and these and other objects which will become better apparent hereinafter are also achieved by a method for the remote provision of services to users which comprises the steps of: supplying means for communication between a user station and at least one video assistance station that belongs to an operator; providing the user station with a terminal for selecting one or more of said services and with a set of multimedia peripherals and processing means for executing applications; detecting the selection on the part of said user of said station of one of said services; activating the use of said selected service; and selecting and associating dynamically, on the basis of said activation, a station operator for video assistance.

Further characteristics and advantages of the invention will become better apparent from the detailed description that follows, given in the form of a non-limiting example with accompanying drawings wherein:
Figure 1 is a block diagram of a system according to the present invention;
Figure 2 is a flowchart that explains the operation of the system in Figure 1 in greater detail.

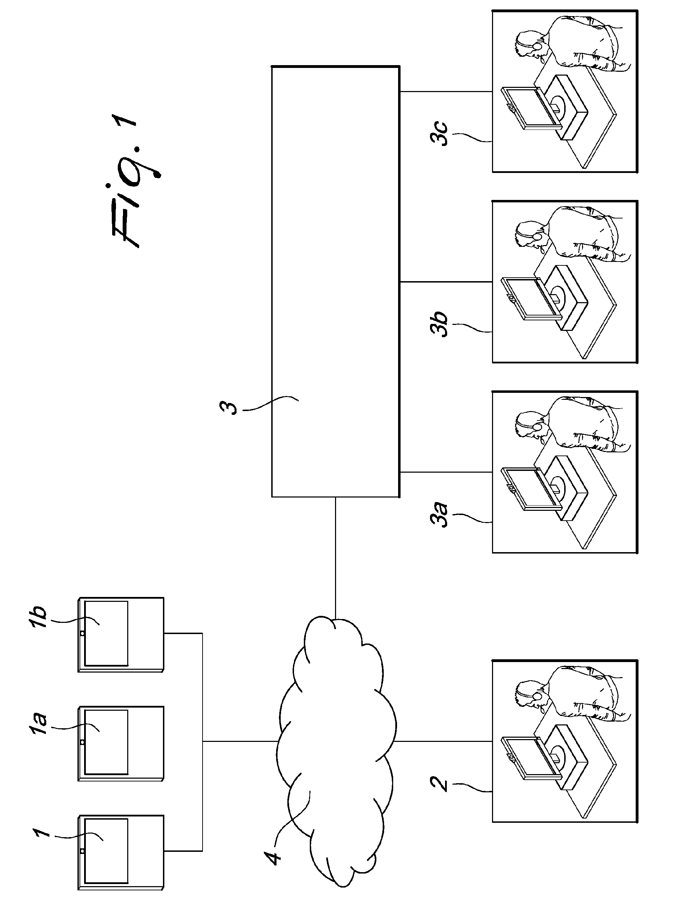

An illustrative architecture that is the subject matter of the present invention is summed up in the block diagram in Figure 1.

Figure 1 shows a plurality of totems or, more generally, of multimedia user station systems 1, 1a, 1b, which are connected by way of a telecommunications network to terminals of remote operator stations 2, 3a, 3b, 3c.

The user station system 1, 1a, 1b comprises means for allowing a user to use services offered by different providers, companies or the like.

In particular the user station system 1, 1a, 1b makes it possible to submit requests for assistance concerning a determined service and intended for a station operator 2, 3a, 3b and 3c.

The user station system 1, 1a, 1b comprises means for the input of data on the part of the user and means for displaying information.

Preferably, such information is associated with data entered by the user or with data provided by the station operator 2, 3a, 3b and 3c.

The user station system 1, 1a, 1b thus comprises common means of input/output, such as for example a terminal provided with a screen, preferably a touchscreen, a keypad, a video camera, means of accessing the communication network 4, means for acquiring images, and other peripherals necessary for the accomplishment of a determined service, for example a scanner and a device for generating access badges.

The user station system 1, 1a, 1b further comprises means for generating requests for assistance, such requests comprising a video call and in general any data session on the network 4 that enables the exchange of information between the station user 1, 1a, 1b and the station operators 2, 3a, 3b and 3c.

The user station system 1, 1a, 1b comprises storage means and a processing unit that is adapted to execute software applications stored in such storage means, or it has access in any case to remotely available storage units.

Some of these applications can be associated with a determined service while others can be used by multiple services. Such applications allow control of the peripherals and of the basic functions with which the system is provided or of a subset of them. The set of applications and of peripherals associated with a determined service constitute the functionalities made available by the provider of the user service.

The user station system 1, 1a, 1b further comprises, for each service and stored in the storage means, a set of data such as a list of the multimedia peripherals and of the software applications that are associated with the service.

The person skilled in the art will realize without effort that the area of the storage means can be organized in the most suitable manner so as to make the storage and acquisition of the data efficient.

The video assistance stations 2, 3a, 3b, 3c are controlled by operators who respond to the user requests generated by the stations 1, 1a, 1b.

In the embodiment shown for the purposes of example, the video assistance station 2 is associated with the provider of a determined service while the stations 3a, 3b, 3c, which are controlled for example by a video call center 3, are managed by external operators, i.e. by operators who although not belonging to the company staff of a determined service management unit are capable of standing in for them, i.e. of responding to the requests of customers.

In particular, the video call center 3 is adapted to receive calls originating from the stations 1, 1a and 1b and to forward them to one of the stations 3a, 3b, 3c.

Each one of the stations 2, 3a, 3b and 3c comprises a terminal with video acquisition means such as for example a video camera or a still camera and means for interconnection by way of the network 4, which can be of the wired or wireless type, to the stations 1, 1a and 1b.

Furthermore each one of the stations 2, 3a, 3b and 3c comprises means for establishing from which of the user stations 1, 1a and 1b the request for assistance originated.

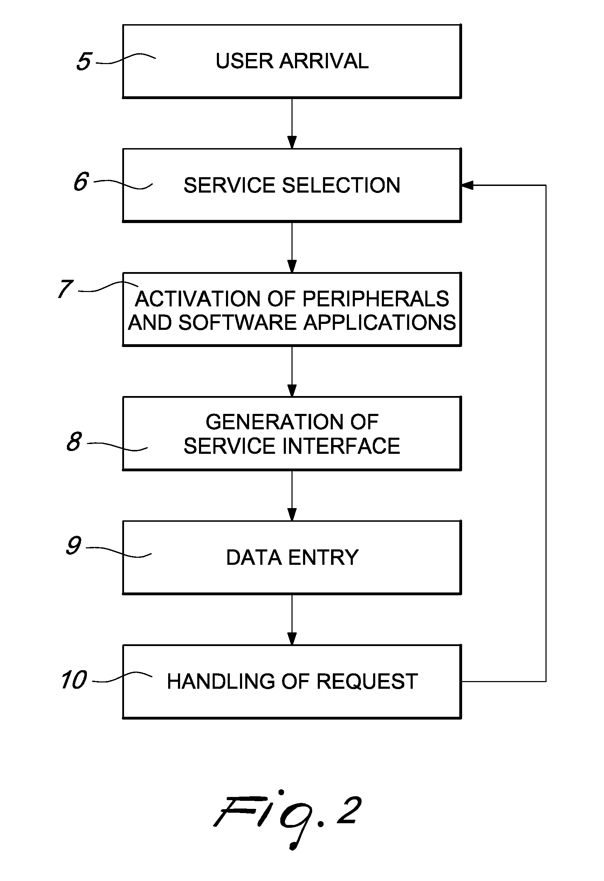

Operation of the method according to the invention will now be explained with reference to the flowchart in Figure 2.

In the embodiment shown for the purposes of example, the user station systems 1, 1a and 1b are adapted to manage a first service for accessing an area that is subject to access control and a second service for submitting requests for assistance to a remote operator of station 2, 3a, 3b, 3c.

In step 5 a customer who wants to access a certain area of a company goes to a place in which the user station 1 is located. The station system 1 provides an interface in which it presents the services that it is capable of offering. For example a first selectable icon indicates a first service, "Access protected area", and a second icon indicates a second service, "Company information".

In step 6, the user selects the first service. This selection can occur for example by using the keypad with which the user station system 1 is provided, or by touching the screen if it is a touchscreen.

In step 7, the processing unit of the station system 1 obtains, from the storage means, the list of the peripherals that can be activated and of the applications that are available for the service selected, which activate the functions of the totem that are necessary for the operation and integrate them with dedicated functions contained in the code of the application.

With regard to the "Access protected area" service, the peripherals that can be activated, preferably by way of the applications associated with the service, can for example comprise a scanner for scanning the identity card of the user and a device for generating access badges.

In step 8, a graphical interface is displayed on the terminal of the station system 1 which enables the user to view information and input data. For example, a form is shown on the screen for entering the credentials of the user, together with a message that invites the user to place his/her identity card in the scanner.

In step 9, the user enters his/her identification data, such as name and surname, and places his/her identity card in the scanner. The scanner has been activated by the adapted application associated with the "Access protected area" service.

In step 10 the user is put into contact with a remote operator in order to complete the accreditation step. For example an adapted application, once the scan of the identity card is complete, automatically sets up a video call and a data session containing the scan carried out by the user. The video call, routed by the video call center 3, is sent for example to the operator 3a.

The operator verifies the identity of the user, by way of a visual comparison between the image of the user shown on his/her station terminal 3a and the data of the identity card.

The operator sends a message to the station 1 which confirms the identity of the user.

A software application on the system 1 intercepts this message and enables the peripheral for generating the access badge. Preferably a message that confirms that the accreditation has concluded successfully is displayed on the screen while the user, provided with the access badge, can access the area. The station system 1 then returns to the initial state, again showing a screen on the terminal for the selection of the service.

If the user wants to avail of the second service, "Company Information", then the user selects the icon associated with this service from the initial screen.

In step 7, the scanner and the peripherals for generating the access badge are not activated, since they are not necessary, and thus remain inactive while the functionalities are made available which make it possible for the user for example to view company information.

In step 8, the graphical interface associated with the second service is shown on the screen.

This interface comprises tools that, for example, make it possible for the user to consult the company staff or a list of products, or to submit a description of a problem.

In step 9, the user enters data such as for example questions concerning a promotion; the user, by selecting an adapted icon, asks to speak with an operator.

In step 10 one of the station operators 2, 3a, 3b, 3c selected responds to the user's call, for example to better explain the details of a promotion. Once the customer's request has been satisfied, the station system 1 returns to the initial screen, showing the services that can be selected once again.

With reference to the use of the system in the context of a marketing service, the operation is similar to what is described above.

A multimedia totem located, for example, in a shopping mall or inside a supermarket comprises and is connected to a series of peripherals, for example a scanner, a printer, a credit card reader, a video camera, a microphone and a loudspeaker.

The totem makes available a series of basic functions, for example the "print" function, which makes it possible to print what is displayed on the screen.

When on standby, i.e. when the totem is waiting for the next user, the totem shows a graphical interface on the screen which enables a user to select one of the available services, i.e. one of the authorized applications on the totem.

For example, the totem can manage two services simultaneously: a service for purchasing a product on site, for example a telephone, and a service for underwriting a vehicle insurance policy.

The user selects the service of interest to him/her on the screen. According to the selection made, the main application that is running on the totem launches the software application for the requested service.

The application that is now being executed displays its graphical interface on the screen, which comprises the necessary functionalities for the service and the management of the functions and of the peripherals necessary for that service.

Preliminarily, the application can for example show general information about the products available for purchase or the policies that can be underwritten.

When the user has viewed the products available and is ready to make a purchase, or if he/she needs to communicate immediately with an operator in order to obtain more information, he/she acts on the graphical interface or on command buttons in order to request the assistance of a remote operator.

At this point, the application that is currently being executed on the totem requests a connection to the video call center, identifying the call in a conventional manner and thus causing the consequent opening, at the station of the selected operator of the video call center, of the interface for the management of the service requested by the user.

At this point, the communication is managed according to conventional systems, with information being exchanged between the user and the operator until the completion of the service.

In the accomplishment of the service, the user uses the functions and the peripherals that are activated on the basis of the service as requested.

At the end of the service, the communication between totem and call center is broken off, and both of the stations are once again available for the management of a new case.

The management of the various different functionalities offered by the multimedia totem can be achieved by way of the execution of various applications, here defined as "secondary", such applications being interdependent and each application being associated with a determined service, such applications being controlled by a main application or "shell application", which provides an interface for accessing the resources of the totem. In particular, as a consequence of the selection on the part of the user of an icon corresponding to a service on the screen of the totem, the main application can assign control of the totem to a specific secondary application and await the completion of the operations required by the service before taking back control of the totem. For example, with reference to the example described previously, upon the selection on the part of a user, the main application executes a secondary application that is delegated to manage the service for underwriting an insurance policy for a vehicle, and moves to a wait state until the conclusion of the service for that user.

A deadlock situation may arise, however, when a user selects a service and the secondary application associated with it waits for data or some form of input, such as for example a "touch" on the part of the user, in order to begin to provide the service for that user. If the user leaves the totem without completing the input operations, a situation will arise in which the secondary application that has taken over control of the totem will remain pending. In this circumstance, if the main application does not establish whether the secondary application is correctly executing operations associated with the service (and hence must not be interrupted) or is in an indefinite wait state (and hence must be terminated), then the main application is in a deadlock situation. In some of these cases, it is possible to put logic in place to have the main application take back control of the totem, based for example on timers.

In a preferred solution, the secondary application tells the main application the state in which it is and, in particular, if it is in a state in which it is awaiting initial data or in any case an initial input on the part of the user (the "standby" state), or if it is in a state in which it is executing the associated service, using the resources made available by the totem (the "activity" state). The main application is always in the condition of being able to establish the state of the secondary application, both directly thanks to communications generated by the latter, or indirectly by analyzing information associated with the state of execution of the secondary application.

The state can be communicated by the secondary application being executed to the main application by way of an adapted protocol based on conventional mechanisms that are commonly used in the field of computing such as pipes, sockets, WCF (Windows Communication Foundation) connections, semaphores or other forms of communication based by way of example on data provided by the operating system being run on the totem, such as, for the Windows operating system, the list of processes/applications, the events listed in the Windows Event Viewer, or the System Register to which the main application has access. The exchange of state information can also be done by using alternative mechanisms such as access to areas of memory and to data inserted in a database, for example SQL and MySQL.

The state of "activity" that corresponds to the step of provision of the service can involve a connection with a contact center or be self-service i.e. involve the execution of operations on the totem without further interactions with external units.

With the communication of the "standby" and "activity" states, the main application can control the secondary application, terminating it when it returns to the "standby" state at the end of an activity or after a timeout when the end user does not provide the initial input.

Communication of the statuses is necessary only for the secondary applications that enter a wait state for input on the part of the user, such input being entered for example by way of a page displayed on the screen of the totem. Therefore if the execution of a service does not require this input, because for example the service consists of showing images relating to a determined product on the screen of the totem, then communication of the state of the application is not necessary, since the application, if executed, goes directly to the "active" state and, at the end of its execution, returns control of the totem to the main application.

It is similarly necessary to manage the situation in which the secondary application undergoes a malfunction and does not correctly terminate its execution. Preferably, the system according to the present invention has mechanisms for controlling the state of operation of the applications on the totem, which are based for example on timeouts that return control of the totem to the main application once a preset time threshold has been exceeded. These mechanisms can be integrated in the main application or be managed by another application, of the type for example commonly referred to as a "watchdog".

The implementation scheme described above, based on pluralities of applications, makes it possible to provide a system that is capable of executing secondary applications produced by third parties and not necessarily by the provider of the totem, as long as such secondary applications are capable of managing communication with the main application according to the standby/active status paradigm described above. The provider of the totem can therefore make libraries available which comprise mechanisms for interfacing with the main application. In this manner, on the one hand multiple service providers, or "vendors", can avail of the totem, using applications produced by them or for them and thus highly customized and tailored to their customers; on the other hand the provider of the totem can maintain the main application separate from the individual secondary applications, with evident benefits in terms of efficiency and maintenance. The supplier of the totem can thus provide a main application that has the task of presenting, by way of an adapted graphical interface, the services available to the user and coordinating the activities of the various secondary applications, allowing the control, execution and forced interruption thereof when necessary.

In a further alternative embodiment, the totem can be configured to execute a sole application that manages the different services as functions that are implemented directly within it. This type of approach has the advantage of not needing to require the implementation of additional communication protocols for the application state, in that the management of each service is integrated, i.e. it is performed by the individual application being executed on the totem. If it is desired to add a new service, it is therefore necessary to replace the application on the totem, after integrating the necessary code into it for the execution and management of the new service offered.

In practice it has been found that the method and the system described fully achieve the intended aim and objects. In particular, it has been seen that the system thus conceived makes it possible to overcome the qualitative limitations of the known art by providing a system that makes it possible to manage a plurality of services by way of an efficient and controlled use of the available resources. The system thus devised makes it possible to select the peripherals necessary for performing a certain service, establishing the rules for their access.

The invention thus conceived introduces mechanisms that control access to the functionalities of totems on the basis of the requirements of the user, and it takes care of implementing policies for controlling access to the resources.

The system described renders the interaction between the user and the assistance of service providers rapid and effective.

In particular, the system makes it possible for multiple providers to each provide their service separately while sharing the same resources so as to keep down costs.

The system predominantly uses resources that can be easily sourced on the market and which enable the provider of the service to field an assistance service that is efficient and economic.

Clearly, numerous modifications are evident and can be readily executed by the person skilled in the art without extending beyond the scope of protection of the present invention. For example the station system 1, 1a, 1b can be installed in an area of a shopping mall for the promotion of different companies. In this case, each one of these companies will have a specific associated service which can be selected by the user, can be customized, and entails a different use of resources on the basis of the requirements of that company. In this manner, the proposed system offers a multi-vendor and multi-service architecture.

Hence, the scope of protection of the claims shall not be limited by the explanations or by the preferred embodiments illustrated in the description by way of examples, but rather the claims shall comprise all the patentable characteristics of novelty that reside in the present invention, including all the characteristics that would be considered as equivalent by the person skilled in the art.

The disclosures in Italian Patent Application No. MI2014A000079 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A system for the remote management of services to users, which comprises means for communication between a user station (1, 1a, 1b) and at least one video assistance station (2, 3, 3a, 3b, 3c) that belongs to an operator, **characterized in that** it further comprises: a) means for detecting the selection, on the part of said user, of at least one service managed by said system; b) means for activating the use, on the part of said user, of said selected service; and c) means for selecting and associating dynamically, on the basis of said activation, one of said video assistance stations (2, 3a, 3b, 3c).

2. The system according to claim 1, **characterized in that** said user station (1, 1a, 1b) comprises a terminal provided with input/output means and multimedia peripherals and software applications for the use of said services.

3. The system according to one or more of the preceding claims, **characterized in that** it is further configured to enable, for each one of said services, one or more of said multimedia peripherals and software applications.

4. The system according to one or more of the preceding claims, **characterized in that** said user station (1, 1a, 1b) is further provided with storage means, said storage means storing, for each one of said services, an activation list, which comprises at least one of said peripherals and of said software applications.

5. The system according to one or more of the preceding claims, **characterized in that** said selected video assistance station (3a, 3b, 3c) is controlled by an operator who is informed with respect to said service selected by said station user (1, 1a, 1b).

6. The system according to one or more of the preceding claims, **characterized in that** said user and assistance stations (1, 1a, 1b, 2, 3a, 3b, 3c) are further provided with audiovisual communication means that are adapted to allow communication between said station operator (2, 3a, 3b, 3c) and said station user (1, 1a, 1b) for the exchange of information related to said service.

7. The system according to one or more of the preceding claims, **characterized in that** said video assistance stations (2, 3a, 3b, 3c) comprise: i) stations of the operators of said services (2) and/or ii) a video call center system (3) that is adapted to manage said communications on behalf of said operators, said video call center system (3) being further configured to select an operator (3a, 3b, 3c) who is competent in replying to the requests of said user.

8. The system according to one or more of the preceding claims, **characterized in that** said multimedia peripherals comprise a screen, preferably a touchscreen, video acquisition devices, means for the acquisition and input of information, and processing units.

9. A method for the remote provision of services to users, which comprises the steps of:
- providing means for communication between a user station (1, 1a, 1b) and at least one video assistance station (2, 3a, 3b, 3c) that belongs to an operator;
- providing said user station (1, 1a, 1b) with a terminal for selecting one or more of said services and with a set of multimedia peripherals and processing means for executing applications;
- detecting the selection, on the part of said user of said station (1, 1a, 1b), of one of said services;
- activating the use of said selected service; and
- selecting and associating dynamically, on the basis of said activation, a station operator (2, 3a, 3b, 3c) for video assistance.

10. The method according to claim 9, **characterized in that** said step of activating the use of said service comprises:
- obtaining a list of the multimedia peripherals and of the software applications that can be activated for said selected service;
- enabling said multimedia peripherals by means of said software applications;
- making said multimedia peripherals usable on the part of said user of said station (1, 1a, 1b).
